# EUROPÄISCHE PATENTANMELDUNG

(11) **EP 2 169 354 A2**
(43) Veröffentlichungstag der Anmeldung: **31.03.2010**
(21) Anmeldenummer: 09170817.2
(22) Anmeldetag: 21.09.2009
(51) Int. Cl.: G01C 21/34

(54) **Verfahren zur Berechnung einer Fahrtroute zur Änderung der Fahrtrichtung eines Fahrzeugs**

(30) Priorität: 26.09.2008 DE 102008042416
(71) Anmelder: Robert Bosch GmbH, 70442 Stuttgart (DE)
(72) Erfinder: Piloth, Daniel, 97500 Ebelsbach (DE)

(57) **Zusammenfassung**

Die Erfindung betrifft Verfahren zur Berechnung einer ersten Fahrtroute zur Führung eines Fahrzeugs entlang der ersten Fahrtroute,
wobei während eines Aufenthaltes des Fahrzeugs auf einem Straßenabschnitt in einer ersten Fahrtrichtung die Berechnung durch ein Initiierungssignal initiiert wird. Das Steuergerät ist **dadurch gekennzeichnet, dass** die erste Fahrtroute in Abhängigkeit von der ersten Fahrtrichtung derart berechnet wird, dass das Fahrzeug durch Abfahren der ersten Fahrtroute zurück auf den Straßenabschnitt geführt wird und nach der Zurückführung eine zweite Fahrtrichtung aufweist, welche der ersten Fahrtrichtung entgegengesetzt ist.

## Beschreibung

### Stand der Technik

Die Erfindung geht aus von einem Verfahren und einem Steuergerät nach Gattung der unabhängigen Ansprüche.

Aus der DE 198 06 794 A1 ist ein Verfahren bekannt, bei welchem bei Abweichen einer Ist-Position eines Fahrzeugs von einer Sollposition eines Fahrzeugs auf einer Fahrtroute Hinweise an einen Fahrer ausgegeben werden, durch welche der Fahrer beispielsweise mittels Wenden auf eine ursprüngliche Route zurückgelangt.

Derartige Hinweise an einen Fahrer werden gemäß des Standes der Technik in einem solchen Fall ausgegeben, dass ein Fahrer mit seinem Fahrzeug sich zu weit von einer zuvor berechneten Fahrtroute entfernt und beispielsweise durch Wenden auf die ursprüngliche Fahrtroute zurückgelangen soll. Derartige Fahranweisungen dienen somit lediglich dazu, dass ein Fahrer mit seinem Fahrzeug eine zuvor berechnete Route einhält.

### Offenbarung der Erfindung

### Vorteile der Erfindung

Das erfindungsgemäße Verfahren mit den Merkmalen des unabhängigen Anspruchs hat demgegenüber den Vorteil, dass eine Berechnung einer ersten Fahrtroute durch ein Initiierungssignal initiiert wird, wobei die Fahrtroute derart berechnet wird, dass das Fahrzeug durch Abfahren der ersten Fahrtroute zurück auf den Straßenabschnitt geführt wird, auf welchem es sich befindet, und das nach der Zurückführung das Fahrzeug eine zweite Fahrtrichtung aufweist, welche der ersten Fahrtrichtung entgegengesetzt ist. Dadurch, dass die Berechnung der ersten Fahrtroute durch ein Initiierungssignal initiiert wird, kann durch das Initiierungssignal jederzeit eine Berechnung einer derartigen Fahrtroute veranlaßt wird, durch welche der Fahrer das Fahrzeug derart führt, dass sich die Fahrtrichtung des Fahrzeugs um vorzugsweise 180 Grad ändert. Eine Berechnung einer solchen Fahrtroute ist beispielsweise dann vorteilhaft, wenn ein Fahrer sich auf einem Straßenabschnitt befindet und aufgrund seiner Ortskenntnis der Ansicht ist, sein Fahrzeug wenden zu wollen, hierzu aber eine entsprechende Wendemöglichkeit in Form einer Fahrtroute benötigt, um beispielsweise die Straßenverkehrsordnung zu beachten. Ein solcher Fall kann dann vorliegen, wenn ein einfaches Wenden auf einem Straßenabschnitt auf Grund beispielsweise einer durchgezogenen Mittellinie nicht erlaubt ist.

Durch die in den abhängigen Ansprüchen aufgeführten Maßnahmen sind vorteilhafte Weiterbildungen und Verbesserungen des in dem unabhängigen Anspruch angegebenen Verfahrens möglich.

Gemäß einer weiteren Ausführungsform der Erfindung wird das Initiierungssignal durch eine Betätigung eines Bedienelementes eines Navigationsgerätes durch einen Nutzer erzeugt. Dies ist vorteilhaft, da der Nutzer selber durch diese Betätigung das Initiierungssignal erzeugt und somit selbständig darüber bestimmen kann, zu welchem Zeitpunkt eine erfindungsgemäße Berechnung einer Fahrtroute vorgenommen wird, um sein Fahrzeug unter Beachtung der Straßenverkehrsordnung zu wenden. Mit einer Berechnung einer solchen Fahrtroute, um das Fahrzeug zu wenden, wird also nicht nur erst dann, wenn -gemäß des Standes der Technik- das Fahrzeug von einer anderen, zuvor berechneten Fahrtroute abweicht, sondern vorzugsweise bereits dann, wenn das Initiierungssignal durch eine Betätigung eines Bedienelementes durch den Nutzer erzeugt wird.

Gemäß einer weiteren Ausführungsform der Erfindung handelt es sich bei dem Bedienelement um eine Taste oder einen Teilbereich eines Touch-Screens. Einer solchen Taste oder einem solchen Teilbereich ist die Erzeugung des Initiierungssignals bei Betätigung der Taste oder des Teilbereichs zugeordnet. Diese Zuordnung muss nicht durch eine weitere Bedientätigkeit des Nutzers herbeigeführt werden, beispielsweise durch Auswahl von Menüeinträgen oder Menüunterpunkten, sondern erfolgt vorzugsweise automatisch. Dieses hat den Vorteil, dass der Fahrer während einer Fahrt auf einem Straßenabschnitt auf besonders einfache Weise das Initiierungssignal zur erfindungsgemäßen Berechnung einer ersten Fahrtroute erzeugen kann, ohne weitere Bedienvorgänge vornehmen zu müssen. Gerade in einem solchen Fall, dass der Fahrer aufgrund seiner Ortskenntnis der Ansicht ist, möglichst zügig eine Änderung der Fahrtrichtung des Fahrzeugs herbeiführen zu müssen, ist eine schnelle und intuitive Bedienung eines solchen Bedienelementes von Vorteil gegenüber Verfahren, bei welchen eine weitere Bedientätigkeit des Nutzers notwendig ist. Hierdurch wird ein Minimum an Betätigung von Bedienelemente durch einen Nutzer erreicht und somit der Nutzer möglichst wenig von der Führung des Fahrzeugs abgelenkt.

Gemäß einer weiteren Ausführungsform der Erfindung wird das Initiierungssignal bei Erreichen eines Fahrzieles automatisch erzeugt. Ein solches Fahrziel ist beispielsweise ein Fahrziel einer zweiten, zuvor berechneten und durch das Fahrzeug zuvor abgefahrenen Fahrtroute. Diese Ausführungsform hat den Vorteil, dass einem Fahrer bei Erreichen eines Fahrzieles eine erste Fahrtroute zur Änderung der Fahrtrichtung des Fahrzeugs berechnet und ausgegeben wird. Dieses ist beispielsweise bei Lastkraftwagen von Speditionen geeignet ist, da diese Lastkraftfahrt nach Fahren einer Fahrtroute häufig zum ursprünglichen Ausgangsziel der Fahrtroute zurückkehren möchten. Hierzu möchte der Fahrer beispielsweise das Fahrzeug wenden, wozu er eine entsprechende Fahrtroute benötigt.

Gemäß einer weiteren Ausführungsform des erfindungsgemäßen Verfahrens werden bei der Berechnung der ersten Fahrtroute Abmessungen des Fahrzeugs berücksichtigt. Dieses ist vorteilhaft, da bei der Berechnung der ersten Fahrtroute somit nur solche Routenabschnitte berücksichtigt werden, welche sich auch zum Abfahren durch das Fahrzeug eignen.

Gemäß eines nebengeordneten Anspruchs wird ein Steuergerät zur Berechnung einer ersten Fahrtroute zur Führung eines Fahrzeugs entlang der ersten Fahrtroute beansprucht. Das Steuergerät weist eine erste Schnittstelle zu einer Positionsbestimmungseinheit, einer Recheneinheit, sowie eine Speichereinheit mit gespeicherten Kartendaten auf. Alternativ dazu, dass das Steuergerät die Speichereinheit mit gespeicherten Kartendaten aufweist, verfügt das Steuergerät über eine zweite Schnittstelle zu einer Speichereinheit mit gespeicherten Kartendaten. Die Recheneinheit schließt anhand von Positionsdaten der Positionsbestimmungseinheit und Kartendaten der Speichereinheit auf einen Straßenabschnitt, auf welchem sich das Fahrzeug befindet. Ferner schließt die Recheneinheit anhand der Positionsdaten auf eine erste Fahrtrichtung des Fahrzeugs entlang des Straßenabschnitts. Während eines Aufenthaltes des Fahrzeuges auf dem Straßenabschnitt wird die Berechnung der ersten Fahrtroute durch ein Initiierungssignal initiiert, welches an die Recheneinheit signalisiert wird. Das erfindungsgemäße Steuergerät ist **dadurch gekennzeichnet, dass** die Recheneinheit die erste Fahrtroute in Abhängigkeit von der ersten Fahrtrichtung derart berechnet, dass das Fahrzeug durch Fahren der ersten Fahrtroute zurück auf den Straßenabschnitt geführt wird und nach der Zurückführung das Fahrzeug eine zweite Fahrtrichtung aufweist, welche der ersten Fahrtrichtung entgegengesetzt ist. Das erfindungsgemäße Steuergerät hat den Vorteil, dass durch eine initiierung der Berechnung der Fahrtroute durch ein Initiierungssignal jederzeit eine solche Fahrtroute berechnet werden kann, durch welche es einem Fahrer ermöglicht wird, einen Fahrtrichtungswechsel seines Fahrzeugs vorzunehmen. Nach Abfahren der Fahrtroute befindet sich das Fahrzeug mit einem entsprechendem Fahrtrichtungswechsel wieder auf dem gleichen Straßenabschnitt, auf welchem es sich bei Initiierung der Routenberechnung befand.

Gemäß einer weiteren Ausführungsform der Erfindung weist das Steuergerät eine dritte Schnittstelle zu einem Bedienelement auf, durch dessen Betätigung das Initiierungssignal erzeugt und an die Recheneinheit signalisiert wird. Dieses hat den Vorteil, dass es einem Nutzer durch eine einfache Betätigung eines Bedienelementes ermöglicht wird, das Steuergerät bzw. die Recheneinheit dazu zu veranlassen, eine entsprechende Fahrtroute zur Änderung der Fahrtrichtung des Fahrzeugs zu berechnen.

Gemäß einer weiteren Ausführungsform der Erfindung erzeugt die Recheneinheit das Initiierungssignal automatisch bei Erreichen eines Fahrzieles einer zweiten, zuvor berechneten und durch das Fahrzeug zuvor abgefahrenen Route. Dieses hat den Vorteil, dass in dem Fall, dass die Recheneinheit aufgrund von Positionsbestimmungsdaten der Positionsbestimmungseinheit darauf schließt, dass ein Fahrziel einer zweiten, zuvor berechneten Fahrtroute erreicht ist, das Steuergerät automatisch eine erste Fahrroute zur Änderung der Fahrtrichtung des Fahrzeugs berechnet. Hierzu ist somit keine Bedienung eines Bedienelementes durch den Fahrer notwendig.

### Kurze Beschreibung der Zeichnung

Ausführungsbeispiele der Erfindung sind in den Zeichnungen dargestellt und in der nachfolgenden Beschreibung näher erläutert.

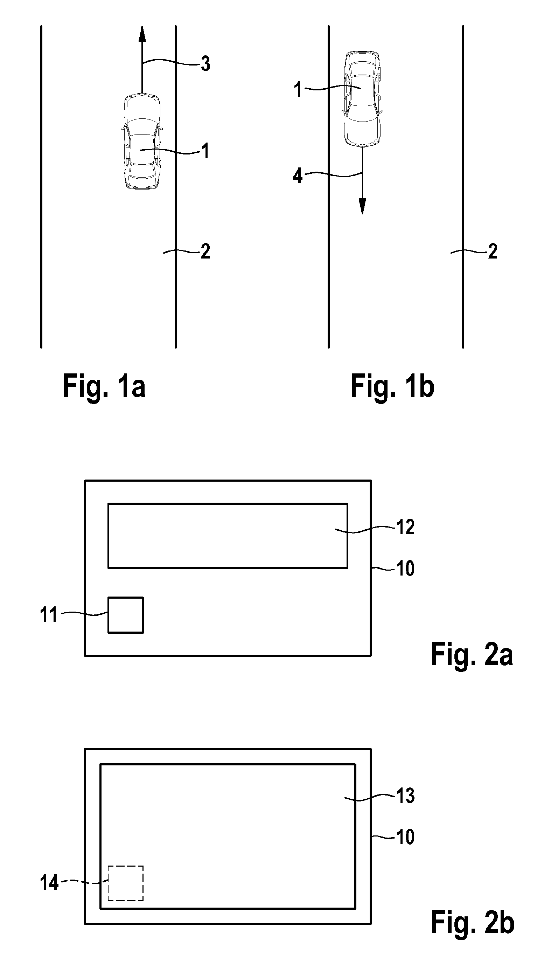

Es zeigen Figur 1a und 1b jeweils ein Fahrzeug auf einem Straßenabschnitt in unterschiedlichen Fahrtrichtungen. Die Figuren 2a und 2b zeigen jeweilige Navigationsgeräte mit unterschiedlichen Bedienelementen.

Die Figur 3 zeigt eine erfindungsgemäße erste Fahrtroute, gemäß einem Ausführungsbeispiel.

Die Figur 4 und Figur 5 zeigen der jeweiligen Ausführungsformen des erfindungsgemäßen Steuergerätes.

### Ausführungsform der Erfindung

Figur 1a zeigt ein Kraftfahrzeug 1 auf einem Straßenabschnitt 2, wobei das Kraftfahrzeug 1 eine erste Fahrtrichtung 3 aufweist. Ist der Fahrer mit seinem Fahrzeug beispielsweise entlang des Straßenabschnitts an einem Ort vorbeigefahren, zu welchem er zurückkehren möchte, so möchte er hierzu die Fahrtrichtung 3 derart ändern, dass das Fahrzeug 1 eine der Fahrtrichtung 3 entgegengesetzte Fahrrichtung aufweist. Ein Ort kann hierbei beispielsweise eine Einfahrt eines Gebäudes, eine Einfahrt des Parkhauses, eine Abzweigung zu einer weiteren Straße, ein Ladenlokal oder ein Parkplatz sein. Der Fahrer möchte somit - wie gemäß Figur 1b dargestellt - mit seinem Fahrzeug 1 auf dem Straßenabschnitt 2 derart entlang fahren, dass das Fahrzeug 1 eine zweite Fahrtrichtung 4 aufweist, welche der ersten Fahrtrichtung 3 entgegengesetzt ist. Da ein einfaches Wenden eines Fahrzeuges mitunter auf Grund der Vorschriften der Straßenverkehrsordnung nicht zulässig ist, benötigt der Fahrer hierzu eine Fahrtroute, welche er abfahren kann, sodass das Fahrzeug sich in einer gemäß Figur 1b beschriebenen Situation befindet. Beispielsweise könnte eine durchgezogene Mittellinie, welche Bereiche eines Straßenabschnitts für unterschiedliche Fahrtrichtungen voneinander trennt, für mehrere 100 m oder mehrere km anhalten. Derartige Situationen sind beispielsweise auf Landstraßen oder auch auf Autobahnen bekannt, auf welchen entlang der Mittellinie mitunter ferner eine Leitplanke verläuft. Aufgrund beispielsweise unzureichender Ortskenntnis des Fahrers des Fahrzeugs 1 benötigt der Fahrer also eine erste Fahrtroute, durch deren Abfahren das Fahrzeug zurück auf den Straßenabschnitt 2 gelangt und nach der Zurückführung die zweite Fahrtrichtung 4 aufweist. Erfindungsgemäß wird die erste Fahrtroute zur Führung des Fahrzeugs durch ein Initiierungssignal initiiert. Die erste Fahrroute wird dann in Abhängigkeit von der ersten Fahrtrichtung 3 derart berechnet, dass das Fahrzeug nach Abfahren der ersten Fahrtroute wiederum auf dem Straßenabschnitt 2 entlang fährt und die zweite Fahrtrichtung 4 aufweist.

Im Zuge der erfindungsgemäßen Berechnung der ersten Fahrroute werden vorzugsweise Fahrtrouten in Form von Straßen, Wendeplätzen, Kreuzungen, Abzweigungen oder Bushaltestellen berücksichtigt.

Vorzugsweise wird das Initiierungssignal durch eine Betätigung eines Bedienelementes eines Navigationsgerätes erzeugt. Hierzu sind entsprechende Ausführungsformen in den Figuren 2a und 2b dargestellt. Gemäß Figur 2a weist ein Navigationsgerät 10 beispielsweise ein Display 12, sowie eine Taste 11 auf. Durch Betätigung der Taste 11 durch den Nutzer wird das Initiierungssignal erzeugt. Vorzugsweise ist zur Erzeugung des Initiierungssignales durch den Nutzer nur eine einzige Betätigung einer einzigen Taste 11 notwendig. Gemäß der Ausführungsform in Figur 2b weist das Navigationsgerät 10 einen Touch-Screen 13 auf, welcher wiederum einen Teilbereich 14 aufweist. Durch Berühren des Teilbereichs 14 durch den Nutzer wird vorzugsweise das Initiierungssignal erzeugt. Insbesondere ist zur Erzeugung des Initiierungssignals nur eine einzige Betätigung in Form eines einzigen Berührens eines Teilbereichs 14 durch den Nutzer notwendig.

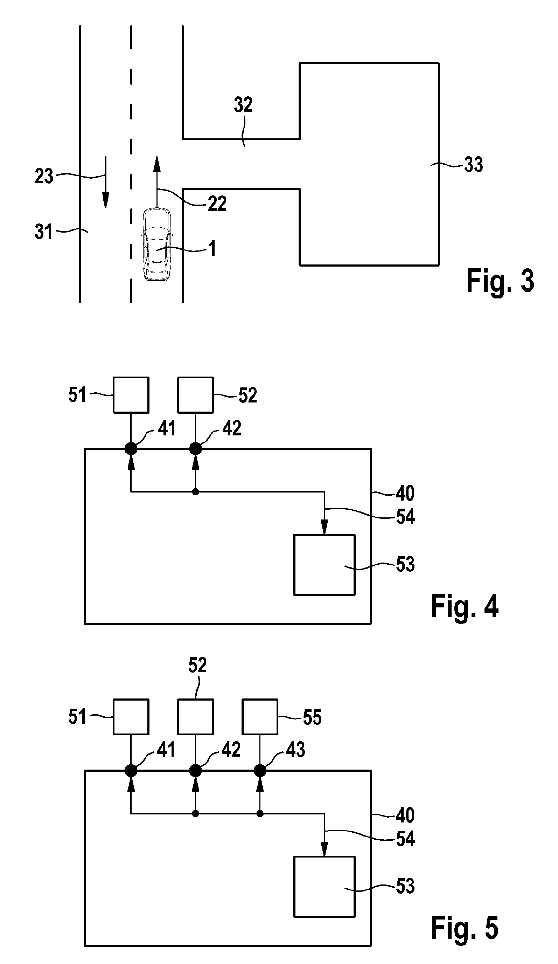

Gemäß eines weiteren Ausführungsbeispieles wird das Initiierungssignal dann erzeugt, wenn das Fahrzeug ein Fahrziel einer Fahrtroute erreicht, bei welcher es sich um eine zweite, zuvor berechnete Fahrtroute handelt. Hat das Fahrzeug also diese zweite Fahrtroute zuvor abgefahren und ist an seinem Fahrziel der zweiten Fahrtroute angelangt, so ist es beispielsweise für den Fahrer vorteilhaft, über in der Nähe liegende Wendemöglichkeiten zum Wenden des Fahrzeugs informiert zu werden. Dieses ist beispielsweise für einen Führer eines LKW einer Spedition vorteilhaft, da dieser beispielsweise für Entladungszwecke des LKW zuvor den LKW wenden möchte. Aufgrund der Abmessungen des LKW ist es für einen Fahrer mitunter somit nicht möglich, den LKW auf einem Straßenabschnitt zu wenden, sondern der LKW Fahrer benötigt hierzu eine entsprechende Fahrtroute. Diese Fahrtroute weist beispielsweise Fahrtroutenabschnitte in Form von Straßen oder auch in Form von Wendeplätzen auf. Gemäß des Ausführungsbeispieles in Figur 3 befindet sich ein Fahrzeug 21 auf einem ersten Straßenabschnitt 31, und der Fahrer möchte das Fahrzeug wenden. Hierzu betätigt der Fahrer beispielsweise ein Bedienelement des Navigationsgerätes, sodass das erfindungsgemäße Verfahren zur Berechnung der ersten Fahrtroute gestartet wird. Gemäß des Ausführungsbeispieles wird dem Fahrer nun eine Fahrtroute vorgeschlagen, welche einen zweiten Straßenabschnitt 32 aufweist, welcher von dem ersten Straßenabschnitt 31 abzweigt, sowie einen Wendeplatz 33, welcher sich an den zweiten Straßenabschnitt 32 anschließt. Auf einem solchen Wendeplatz kann beispielsweise der Fahrer das Fahrzeug 21 problemlos wenden und anschließend wiederum durch abfahren des zweiten Straßenabschnitts 32 derart auf den ersten Straßenabschnitt 31 gelangen, dass das Fahrzeug nach vorherigem Aufweisen einer ersten Fahrtrichtung 22 nun eine zweite Fahrtrichtung 23 aufweist, welche der ersten Fahrtrichtung 22 entgegengesetzt ist.

Vorzugsweise werden bei der Berechnung der ersten Fahrtroute Abmessungen des Fahrzeugs berücksichtigt. Beispielsweise kann die Länge des Fahrzeuges berücksichtigt werden, die Breite des Fahrzeugs und/oder die Höhe des Fahrzeugs. Beispielsweise ist der in der Figur 3 gezeigte Wendeplatz 33 von einer bestimmten Größe, so dass anhand der Länge des LKW's 21 darauf geschlossen werden kann, ob der Wendeplatz 33 sich zum Wenden des Fahrzeugs 21 eignet ist oder nicht. Entsprechend kann der Wendeplatz 33 bei der Berechnung der Fahrtroute entweder berücksichtigt werden oder nicht. Ferner ist es vorzugsweise möglich, bekannte Abmaße eines Wendekreises eines Fahrzeugs bei der Berechnung der ersten Fahrtroute zu berücksichtigen, sodass nur solche Fahrtroutenabschnitte bei der Berechnung der ersten Fahrtroute berücksichtigt werden, welche ein problemloses Befahren der Fahrtroutenabschnitte durch das Fahrzeug ermöglichen. Die Abmessung und/oder der Wendekreis des Fahrzeugs 21 werden hierbei auf unterschiedliche Weise vorzugsweise dem Verfahren zugänglich gemacht. Gemäß einer Ausführungsform werden die Abmessungen und/oder der Wendekreis durch einen Nutzer über ein Bedienelement eingegeben. Gemäß einer weiteren Ausführungsform sind diese Daten abgespeichert, sodass diese aus einer Speichereinheit abgerufen werden können. Gemäß einer weiteren Ausführungsform werden die Abmessungen und/oder der Wendekreis des Fahrzeugs 21 durch Sensoren an dem Fahrzeug 21 erfasst.

Wird gemäß einer weiteren Ausführungsform ein Bedienelement zur Erzeugung des Initiierungssignals betätigt, so wird vorzugsweise unmittelbar einer Ausgabe von Zielführungsinformationen einer zweiten, zuvor berechneten Fahrtroute beendet. Fährt ein Fahrer also beispielsweise in einem Fahrzeug bereits seit einiger Zeit entlang einer zuvor berechneten, zweiten Fahrtroute, ist aber noch nicht an dem Fahrziel dieser zweiten Fahrtroute angelangt, so kann es zu einer Situation kommen, in welcher der Fahrer nicht weiter zu dem Fahrziel der zweiten Fahrtroute geleitet werden möchte, sondern lediglich Information wünscht, auf welche Weise er sein Fahrzeug so führen kann, dass die Fahrtrichtung des Fahrzeugs geändert wird. Daher ist er nicht weiter an Zielführungsinformationen zu der zuvor berechneten Fahrtroute interessiert, sondern nur noch an der erfindungsgemäß berechneten ersten Fahrtroute. Anstatt einer Beendigung der Ausgabe von Zielführungsinformationen der zweiten Fahrtroute durch den Nutzer anhand von zusätzlichen Bedientätigkeiten wird diese Beendigung gemeinsam damit eingeleitet, dass das Initiierungssignal durch eine Betätigung eines Bedienelementes durch den Nutzer erzeugt wird. Der Nutzer wird hierdurch in der Form entlastet, dass er nicht durch zusätzliche Bedientätigkeiten die Ausgabe der Zielführungsinformationen der zweiten Fahrtroute selber beenden muss.

Gemäß Figur 4 ist ein erfindungsgemäßes Steuergerät 40 gemäß einer ersten Ausführungsform dargestellt. Das Steuergerät 40 weist eine Recheneinheit 53 auf, sowie eine erste Schnittstelle 41 und eine zweite Schnittstelle 42. Vorzugsweise ist die Recheneinheit 53 über die beiden Schnittstellen 41, 42 mit einem Dateninterface 54, vorzugsweise einem Datenbussystem, oder einer weiteren Form von Datenleitungen verbunden. Über die erste Schnittstelle 41 ist das Steuergerät 40 mit einer Positionbestimmungseinheit 51 verbunden. Bei der Positionsbestimmungseinheit 51 handelt es sich beispielsweise um eine oder mehrere GPS-Sensoren, welche vorzugsweise als Positionsdaten GPS-Daten an das Steuergerät 40 ausgeben. Vorzugsweise schließt die Recheneinheit 53 anhand der Positiondaten auf eine Position des Fahrzeugs. Gemäß einer anderen Ausführungsform weist die Positionsbestimmungseinheit 51 selber eine Auswerteeinheit auf, welche nicht näher dargestellt ist. Diese Positionsbestimmungseinheit 51 bestimmt eine Position des Fahrzeugs und gibt und diese Position als Positionsdaten über die erste Schnittstelle 41 an das Steuergerät 40 bzw. an die Recheneinheit 53 weiter. Über die zweite Schnittstelle 42 ist das Steuergerät 40 mit einer Speichereinheit 52 verbunden, in welcher Kartendaten, vorzugsweise Navigationskartendaten, abgespeichert sind. Die Recheneinheit 53 hat somit über die zweite Datenschnittstelle 42 Zugriff auf die in der Speichereinheit 52 gespeicherten Daten. Vorzugsweise ist die Speichereinheit 52 als eine in dem Steuergerät 40 enthaltene Einheit ausgebildet. In einem solchen Fall ist auch die Speichereinheit 52 über das Bussystem 54 mit der Recheneinheit innerhalb des Steuergerätes 40 verbunden. Die zweite Schnittstelle 42 erübrigt sich vorzugsweise in einem solchen Fall.

Die Recheneinheit 53 schließt anhand der Positionsdaten und der Kartendarten auf einen Straßenabschnitt, auf welchem sich das Fahrzeug 1 befindet. Ferner schließt die Recheneinheit 53 auf die erste Fahrtrichtung 3, wie gemäß Figur 1a dargestellt. Während eines Aufenthaltes des Fahrzeugs 1 auf dem Straßenabschnitt 2 wird durch einen Initiierungssignal die Berechnung der ersten Fahrtroute initiiert, wobei das Initiierungssignal an die Recheneinheit 53 signalisiert wird. Die Recheneinheit 53 berechnet die erste Fahrtroute in Abhängigkeit von der ersten Fahrtrichtung 3 derart, dass das Fahrzeug 1 durch Abfahren der ersten Fahrtroute zurück auf den Straßenabschnitt 2 geführt wird und nach der Zurückführung die Fahrtrichtung 4 gemäß Figur 1b aufweist, welche der ersten Fahrtrichtung 3 entgegengesetzt ist.

Gemäß des Ausführungsbeispieles in Figur 5 weist das Steuergerät 40 ferner eine dritte Schnittstelle 43 auf, über welches das Steuergerät 40 mit einem Bedienelement 55 verbunden ist. Bei dem Bedienelement handelt es sich beispielsweise um eine Taste oder einen Teilbereich eines Touch-Screens. Wird das Bedienelement durch einen Nutzer betätigt, so wird durch diese Betätigung das Initiierungssignal erzeugt und an die Recheneinheit 40 signalisiert. Die dritte Schnittstelle 33 steht hierbei auch über das Bussystem 54 mit der Recheneinheit 53 in Verbindung. Gemäß des Ausführungsbeispieles in Figur 4 erzeugt vorzugsweise die Recheneinheit 53 das Initiierungssignal selber, und zwar in dem Fall, dass das Fahrzeug ein Fahrziel einer zweiten, zuvor berechneten und durch das Fahrzeug zuvor abgefahrenen Fahrtroute erreicht.

## Patentansprüche

1. Verfahren zur Berechnung einer ersten Fahrtroute zur Führung eines Fahrzeugs (1) entlang der ersten Fahrtroute,
wobei während eines Aufenthaltes des Fahrzeugs (1) auf einem Straßenabschnitt (2) in einer ersten Fahrtrichtung (3) die Berechnung durch ein Initiierungssignal initiiert wird,
**dadurch gekennzeichnet, dass** die erste Fahrtroute in Abhängigkeit von der ersten Fahrtrichtung (3) derart berechnet wird, dass das Fahrzeug (1) durch Abfahren der ersten Fahrtroute zurück auf den Straßenabschnitt (2) geführt wird und nach der Zurückführung eine zweite Fahrtrichtung (4) aufweist, welche der ersten Fahrtrichtung (3) entgegengesetzt ist.

2. Verfahren nach Anspruch 1,
**dadurch gekennzeichnet, dass** das Initiierungssignal durch eine Betätigung eines Bedienelementes (11, 14) eines Navigationsgerätes (10) durch einen Nutzer erzeugt wird.

3. Verfahren nach Anspruch 2,
**dadurch gekennzeichnet, dass** es sich bei dem Bedienelement um eine Taste (11) oder um einen Teilbereich (14) eines Touch-Screens (13) handelt, welcher oder welchem die Erzeugung des Initiierungssignals zugeordnet ist, ohne dass diese Zuordnung durch eine weitere Bedientätigkeit des Nutzers herbeigeführt werden muss.

4. Verfahren nach Anspruch 1,
**dadurch gekennzeichnet, dass** das Initiierungssignal bei Erreichen eines Fahrtzieles einer zweiten, zuvor berechneten und durch das Fahrzeug (1) zuvor abgefahrenen Fahrtroute automatisch erzeugt wird.

5. Verfahren nach einem der Ansprüche 2 bis 3,
**dadurch gekennzeichnet, dass** durch die Betätigung des Bedienelementes (11, 14) eine Ausgabe von Zielführungsinformationen einer zweiten, zuvor berechneten Fahrtroute beendet wird.

6. Verfahren nach einem der vorhergehenden Ansprüche,
**dadurch gekennzeichnet, dass** bei der Berechnung der ersten Fahrtroute Abmessungen des Fahrzeugs (1) berücksichtigt werden.

7. Steuergerät (40) zur Berechnung einer ersten Fahrtroute zur Führung eines Fahrzeugs (1) entlang der ersten Fahrtroute,
aufweisend eine erste Schnittstelle (41) zu einer Positionsbestimmungseinheit (51), eine Recheneinheit (53) sowie eine Speichereinheit mit gespeicherten Kartendaten oder eine zweite Schnittstelle (42) zu einer Speichereinheit (52) mit gespeicherten Kartendaten,
wobei die Recheneinheit (53) anhand von Positionsdaten der Positionsbestimmungseinheit (51) und Kartendaten der Speichereinheit auf einen Straßenabschnitt (2), auf welchem sich das Fahrzeug (1) befindet, und auf eine erste Fahrtrichtung (3) des Fahrzeugs (1) schließt,
wobei während eines Aufenthaltes des Fahrzeugs (1) auf dem Straßenabschnitt (2) die Berechnung der ersten Fahrtroute durch ein Initiierungssignal initiiert wird, welches an die Recheneinheit (53) signalisiert wird,
**dadurch gekennzeichnet, dass** die Recheneinheit (53) die erste Fahrtroute in Abhängigkeit von der ersten Fahrtrichtung (3) derart berechnet, dass das Fahrzeug (1 durch Abfahren der ersten Fahrtroute zurück auf den Straßenabschnitt (2) geführt wird und nach der Zurückführung eine zweite Fahrtrichtung (4) aufweist, welche der ersten Fahrtrichtung (3) entgegengesetzt ist.

8. Steuergerät nach Anspruch 7,
**dadurch gekennzeichnet, dass** das Steuergerät (40) eine dritte Schnittstelle (43) zu einem Bedienelement (53) aufweist, durch dessen Betätigung das Initiierungssignal erzeugt und an die Recheneinheit (53) signalisiert wird.

9. Steuergerät nach Anspruch 8,
**dadurch gekennzeichnet, dass** die Recheneinheit (53) das Initiierungssignal bei Erreichen eines Fahrtzieles einer zweiten, zuvor berechneten und durch das Fahrzeug (1) zuvor abgefahrenen Fahrtroute erzeugt.
